# EUROPÄISCHE PATENTSCHRIFT

(11) **EP 3 173 670 B1**
(45) Veröffentlichungstag und Bekanntmachung des Hinweises auf die Patenterteilung: **29.07.2020**
(21) Anmeldenummer: 15196072.1
(22) Anmeldetag: 24.11.2015
(51) Int. Cl.: F01D 11/00, F16J 15/3268, F16J 15/3288

(54) **BÜRSTENDICHTUNGSANORDNUNG FÜR EINE STRÖMUNGSMASCHINE, EINBAUSICHERUNGSANORDNUNG UND STRÖMUNGSMASCHINE**
BRUSH SEAL ASSEMBLY FOR A FLUID FLOW MACHINE, MOUNTING SECURING ARRANGEMENT AND FLUID FLOW MACHINE
SYSTÈME DE JOINT BALAI POUR UNE TURBOMACHINE, SYSTÈME DE MISE À LA TERRE ET TURBOMACHINE

(43) Veröffentlichungstag der Anmeldung: 31.05.2017
(73) Patentinhaber: MTU Aero Engines AG, 80995 München (DE)
(72) Erfinder: Albers, Lothar, 80638 München (DE); Zotz, Georg, 85778 Haimhausen (DE); Pröstler, Stephan, 82266 Inning a. Ammersee (DE); Beichl, Stefan, 82211 Herrsching (DE); Becker, Hermann, 85757 karlsfeld (DE)

(56) Entgegenhaltungen:
- EP-A1- 0 534 686
- EP-A2- 1 146 266
- EP-B1- 0 757 750
- FR-A1- 3 011 585
- US-A- 5 498 139
- US-B1- 8 133 014
- US-B2- 7 192 246

## Beschreibung

Die vorliegende Erfindung betrifft eine Bürstendichtungsanordnung für eine Strömungsmaschine gemäß dem Oberbegriff des Anspruchs 1, eine Einbausicherungsanordnung gemäß Anspruch 9 sowie eine Strömungsmaschine gemäß Anspruch 10.

In Strömungsmaschinen gibt es zahlreiche Dichtungen zum Abdichten oder Reduzieren von Leckageströmungen, Bypassströmungen oder Rückströmungen. Beispielsweise werden derartige Strömungen in Spalten zwischen statischen und bewegten Bauteilen durch berührende oder nicht-berührende Dichtungen zumindest reduziert. Solche Dichtungen werden oft als Ringdichtungen in statische Bauteile wie etwa in Gehäuse oder in Leiträdern eingesetzt. Beispiele für derartige Dichtungen sind Labyrinthdichtungen, Lippendichtungen oder Bürstendichtungen. Bei der Anordnung der Dichtungen ist darauf zu achten, dass alle Dichtungskomponenten während des vorgesehenen Einsatzes der Strömungsmaschine ortsfest und möglichst genau positioniert bleiben, um die gewünschte Dichtwirkung tatsächlich zu erzielen. Eine übliche Fixierung eines Dichtungsrings erfolgt beispielsweise mittels formschlüssiger Verbindungen wie etwa Haken, Stiften oder Absätzen.

In der EP 1 146 266 A2 wird eine Bürstendichtung zum Abdichten eines Rotors gegen einen Stator beschrieben. Die Bürstendichtung umfasst ein am Stator oder Rotor gehaltenes, eine Deckplatte und eine Stützplatte aufweisendes Borstengehäuse mit einer Umfangsfläche und zwei Seitenflächen, in dem mit ihren freien Enden zu dem Rotor oder Stator ausgerichtete Borsten befestigt sind.

Eine Aufgabe der vorliegenden Erfindung ist es, eine Bürstendichtungsanordnung einer Strömungsmaschine vorzuschlagen.

Die erfindungsgemäße Aufgabe wird durch eine Bürstendichtungsanordnung mit den Merkmalen des Anspruchs 1 gelöst. Sie wird ferner durch eine Einbausicherungsanordnung gemäß Anspruch 9 und eine Strömungsmaschine gemäß Anspruch 10 gelöst.

Erfindungsgemäß wird somit eine Bürstendichtungsanordnung für eine Strömungsmaschine vorgeschlagen, die wenigstens einen Stator, einen Rotor und eine Bürstendichtung umfasst. Die Bürstendichtung weist wenigstens ein Bürstenelement und einen Ring zur Aufnahme des Bürstenelements auf, wobei die Bürstendichtung einen Spalt zwischen dem Stator und dem Rotor abdichtet. Der Ring ist direkt oder indirekt mittels einer Presspassung mit dem Stator verbunden. Der Ring weist einen ersten Werkstoff mit einem ersten Wärmeausdehnungskoeffizienten auf. Wenigstens ein Abschnitt des Stators weist zur Aufnahme des Rings einen zweiten Werkstoff mit einem zweiten Wärmeausdehnungskoeffizienten auf. Der erste Werkstoff weist einen ersten Wärmeausdehnungskoeffizienten (α1) von größer oder gleich 10 x 10-6 pro Kelvin in einem Temperaturbereich zwischen wenigstens 20 Grad Celsius und 400 Grad Celsius auf. Der zweite Werkstoff weist einen zweiten Wärmeausdehnungskoeffizienten (α2) von kleiner oder gleich 10 x 10-6 pro Kelvin in einem Temperaturbereich zwischen wenigstens 20 Grad Celsius und 90 Grad Celsius auf.

Die erfindungsgemäße Strömungsmaschine umfasst wenigstens eine erfindungsgemäße Bürstendichtungsanordnung. Die Strömungsmaschine kann ein Verdichter, insbesondere ein Hochdruckverdichter, sein. Ebenso kann die Strömungsmaschine ein Flugtriebwerk sein.

Vorteilhafte Weiterentwicklungen der vorliegenden Erfindung sind jeweils Gegenstand von Unteransprüchen und Ausführungsformen.

Erfindungsgemäße beispielhafte Ausführungsfonnen können eines oder mehrere der im Folgenden genannten Merkmale aufweisen.

Die erfindungsgemäße Bürstendichtungsanordnung kann für eine Anwendung in einem Hochdruckverdichter, in einem Niederdruckverdichter, in einer Hochdruckturbine oder in einer Niederdruckturbine eines Flugtriebwerks ausgestaltet sein.

In einigen erfindungsgemäßen Ausführungsformen ist die Strömungsmaschine eine axiale Strömungsmaschine, insbesondere eine Gasturbine, insbesondere eine Fluggasturbine.

In gewissen, erfindungsgemäßen Ausführungsformen ist der Stator ein Gehäuse oder ein Gehäuseabschnitt, ein Leitrad oder ein Leitradabschnitt, ein Innenring eines Leitrads oder ein anderes statisches Bauteil der Strömungsmaschine. Ein statisches Bauteil ist ein nicht bewegtes, insbesondere ein nicht angetriebenes und/oder ein nicht rotierendes Bauteil der Strömungsmaschine.

Der Begriff "Rotor", wie er hierin verwendet wird, bezeichnet einen Rotationskörper in der Strömungsmaschine, der sich im bestimmungsgemäßen Gebrauch um eine Rotationsachse oder Drehachse der Strömungsmaschine dreht.

In manchen, erfindungsgemäßen Ausführungsformen ist der Rotor eine Welle, eine Nabe, ein Laufrad oder ein Laufradabschnitt, ein Deckband oder ein Deckbandabschnitt oder ein anderes rotierendes Bauteil einer Strömungsmaschine. Ein rotierendes Bauteil ist ein sich drehendes Bauteil.

In bestimmten, erfindungsgemäßen Ausführungsformen ist die Bürstendichtung eine axiale oder eine radiale Wellendichtung.

In einigen erfindungsgemäßen Ausführungsformen ist der Ring der Bürstendichtung eine Bürstenelementaufnahmeeinrichtung, eine Fassung für das Bürstenelement und/oder eine Stützvorrichtung für Bürsten einer Bürstendichtung.

Der Begriff "Passung", wie er hierin verwendet wird, bezeichnet eine maßliche Beziehung zwischen zwei gepaarten, toleranzbehafteten Teilen. Insbesondere weisen die beiden Teile ein unterschiedliches Nennmaß auf. Die Lage und Größe der Toleranzfelder können unterschiedlich sein. Passungen oder Passsysteme können genormt sein, beispielsweise nach DIN- oder ISO-Normen. Ebenso können Passungen oder Passsysteme nicht genormt sein. Wenn die Passungen oder Passsysteme nicht genormt sind, können die Toleranzen oder Passungsangaben für Nennmaße von den Werten der ISO-Normen abweichen. Insbesondere weichen die Passungen oder Passsysteme bei der Verwendung von Nicht-ISO-Maßeinheiten, beispielsweise bei der Verwendung des Längenmaßes "Inch" anstatt "Meter" von den ISO-Normen ab.

Der Begriff "Presspassung", wie er hierin verwendet wird, bezeichnet eine Übermaßpassung von zwei Bauteilen, die mittels einer kraftschlüssigen Verbindung miteinander verbunden sind oder werden. Die beiden Bauteile weisen ein unterschiedliches Nennmaß auf. Die Istmaße weisen wenigstens ein Übermaß auf, so dass die beiden Bauteile kraftschlüssig ohne Relativbewegung zueinander verbunden werden können. Erfindungsgemäß ist der Ring der Bürstendichtung mittels einer Presspassung mit dem Stator verbunden. Somit weisen sowohl der Ring als auch der Stator wenigstens an den miteinander verbundenen, in Kontakt stehenden Flächen ein unterschiedliches Nennmaß auf. Die Presspassung oder Übermaßpassung dieser Verbindung führt dazu, dass die beiden Bauteile im Einbauzustand kraftschlüssig miteinander verbunden sind oder werden.

Der Wärmeausdehnungskoeffizient, abgekürzt als α, kann als thermischer Längenausdehnungskoeffizient bezeichnet werden. Die Einheit des thermischen Längenausdehnungskoeffizienten α ist [m/mK].

Der erste Wärmeausdehnungskoeffizient ist, unterschiedlich zu dem zweiten Wärmeausdehnungskoeffizient.

Der Ring der Bürstendichtung mit dem ersten Werkstoff weist einen größeren Wärmeausdehnungskoeffizienten gegenüber dem Stator mit dem zweiten Werkstoff auf. Beispielsweise kann ein Ring mit einem Werkstoff, der einen größeren Wärmeausdehnungskoeffizienten gegenüber einem Innenring (als Stator) aufweist, dazu führen, dass bei erhöhten Betriebstemperaturen sich der Ring der Bürstendichtung stärker ausdehnt als der Innenring. Dies kann dazu führen, dass die kraftschlüssige Verbindung zwischen dem Innenring und dem Ring zu einem erhöhten Kraftschluss führt. Exemplarische Materialpaarungen und Wärmeausdehnungskoeffizienten werden in der Figurenbeschreibung ausgeführt.

In bestimmten, erfindungsgemäßen Ausführungsformen ist der Stator ein Innenring eines Leitrads. Das Leitrad kann verstellbare oder nicht verstellbare Leitschaufeln aufweisen. Der Innenring kann den radial inneren Abschluss der Leitschaufeln ausbilden. Eine Bürstendichtung mit einem Bürstenelement und einem Ring kann auf den Innenring, insbesondere in Axialrichtung, aufgeschoben und mittels einer Presspassung kraftschlüssig verbunden werden. Die Bürstendichtung kann beispielsweise einen Spalt zwischen dem Innenring und einer Welle oder einer Nabe, welche mit der Welle verbunden oder angeflanscht ist, ganz oder teilweise abdichten. Dadurch kann eine Sekundärströmung durch diesen Spalt verhindert oder zumindest verringert werden. Dies kann vorteilhaft den Wirkungsgrad der Strömungsmaschine verbessern.

In einigen, erfindungsgemäßen Ausführungsformen ist der Stator ein Gehäuse oder ein Gehäuseabschnitt der Strömungsmaschine. Eine Bürstendichtung mit einem Bürstenelement und einem Ring kann einen Spalt zwischen dem Gehäuse und beispielsweise einem Deckband eines Laufrads abdichten. Damit kann eine Sekundärströmung, z. B. eine lokale Rückströmung, durch diesen Spalt verhindert oder zumindest verringert werden. Dies kann vorteilhaft den Wirkungsgrad und/oder das Betriebsverhalten der Strömungsmaschine verbessern.

In gewissen, erfindungsgemäßen Ausführungsformen ist der Rotor ein Laufschaufelabschnitt oder eine Welle der Strömungsmaschine. Ein Laufschaufelabschnitt kann ein Deckband sein, welches die radial äußeren Laufschaufeln über dem Umfang des Laufrades miteinander verbinden. Ebenso kann der Rotor eine Welle, ein Wellenabschnitt oder eine mit der Welle verbundene Nabe sein. Die Nabe kann insbesondere ein Abschnitt eines sogenannten Front Hub sein, der stromaufseitig mit einer ersten Rotorstufe verbunden ist und diese fixiert. An die erste Rotorstufe können sich weitere Rotorstufen anschließen, die stromabseitig mit einem sogenannten Rear Hub, der ebenfalls als Nabe bezeichnet werden kann, fixiert werden.

In manchen, erfindungsgemäßen Ausführungsformen umfasst die Presspassung eine in Radialrichtung kraftschlüssige Verbindung des Rings mit dem Stator. Insbesondere ist die radial äußere Umfangsfläche des Rings, oder wenigstens ein Abschnitt dieser Umfangsfläche, mit einer radial innen angeordneten Umfangsfläche des Innenrings verbunden. Die radial innenliegende Umfangsfläche des Innenrings kann eine Stufe, ein Absatz, eine Nut oder eine andere Fläche sein. Der Innenring kann axial geteilt sein, um den Ring und/oder die gesamte Bürstendichtung auf oder an den Innenring zu montieren. Der Ring ist insbesondere über dem Umfang einteilig und nicht über dem Umfang segmentiert hergestellt.

In gewissen, erfindungsgemäßen Ausführungsformen ist die Presspassung des Rings mit dem Stator keine axiale kraftschlüssige Verbindung.

In einigen, erfindungsgemäßen Ausführungsformen weist der Ring, oder Abschnitte des Rings, keine weitere Vorrichtung, Anordnung oder Einrichtung gegen ein Verdrehen oder eine Relativbewegung des Rings gegenüber dem Innenring auf. Eine Vorrichtung ist beispielsweise ein Haken, eine Feder-Nut-Verbindung, ein Stift, eine Schraube oder eine andere formschlüssige Verbindung.

In bestimmten, erfindungsgemäßen Ausführungsformen ist die Bürstendichtung eine berührende Dichtung, die einen Spalt mittels einem Bürstenelement ganz oder teilweise abdichtet.

In einigen, erfindungsgemäßen Ausführungsformen weist die Bürstendichtung ein Bürstenelement auf, welches mittels einer Klemmvorrichtung in dem Ring fixiert ist. Beispielsweise kann das Bürstenelement mittels eines weiteren Rings, insbesondere einem als Stützring ausgebildeten zweiten Rings, mittels einer Klemmung lösbar oder nicht wieder lösbar fixiert werden.

In gewissen, erfindungsgemäßen Ausführungsformen weist der Ring einen Stützabschnitt zum Fixieren des Bürstenelements auf. Ein Stützabschnitt kann die Bürsten des Bürstenelement gegen ein Umknicken, Auslenken, Ausfransen oder ein Beschädigen, insbesondere gegen ein mechanisches Beschädigen, schützen.

In manchen, erfindungsgemäßen Ausführungsformen weist die Bürstendichtungsanordnung einen axialen Sicherungsring zum Sichern des mit dem Stator verbundenen Rings auf. Ein axialer Sicherungsring kann eine zusätzliche Sicherung der Bürstendichtung bei einem möglichen Versagen der Presspassung sein. Alternativ oder zusätzlich kann ein axialer Sicherungsring bei einem mechanischen Versagen der Bürstendichtung, oder einzelner Teile der Bürstendichtung, beispielsweise bei einem Bruch des Rings oder bei einem Lösen eines geklemmten Bürstenelements, die Bürstendichtung fixieren. Ein axialer Sicherungsring kann bei einem Versagen der Bürstendichtung oder einzelner Bauteile der Bürstendichtung die übrigen Bauteile der Strömungsmaschine gegen eine Beschädigung sichern.

Beispielsweise kann Der erste Werkstoff kann eine metallische Legierung mit dem Hauptbestandteil Eisen sein, beispielsweise Stahl. Stahl kann einen Wärmeausdehnungskoeffizienten zwischen 10 x 10⁻⁶ m/(m x K) und 18 x 10⁻⁶ m/(m x K) aufweisen, wobei sich diese Werte auf einen Temperaturbereich zwischen 20 Grad Celsius und 200 Grad Celsius beziehen. Eine derartige Stahllegierung ist beispielsweise der Werkstoff X5CrNiCuNb17-4-4 (Werkstoff Nr. 1.4548). Insbesondere weist der Werkstoff X5CrNiCuNb17-4-4 einen Wärmeausdehnungskoeffizienten von ca. 11 x 10⁻⁶ m/(m x K) auf.

Der zweite Werkstoff kann eine Titanlegierung sein. Titanlegierungen können einen Wärmeausdehnungskoeffizienten zwischen 7,6 x 10⁻⁶ m/(m x K) und 10 x 10⁻⁶ m/(m x K) aufweisen, wobei sich diese Werte auf einen Temperaturbereich zwischen 20 Grad Celsius und 200 Grad Celsius beziehen. Eine derartige Titanlegierung ist beispielsweise der Werkstoff Ti-6A1-4V (abgekürzt: Ti 6-4; Titanlegierung mit 6 Gewichtsprozent Aluminium und 4 Gewichtsprozent Vanadium). Insbesondere weist der Werkstoff Ti-6Al-4V einen Wärmeausdehnungskoeffizienten von ca. 9 x 10⁻⁶ m/(m x K) auf.

In manchen, erfindungsgemäßen Ausführungsformen ist der erste Werkstoff ein Stahl und/oder der zweite Werkstoff eine Titanlegierung.

In bestimmten, erfindungsgemäßen Ausführungsformen weist der Stator eine axiale Begrenzung zum Positionieren und/oder zum Begrenzen der axialen Verschiebbarkeit der Bürstendichtung auf dem Stator auf, wobei die axiale Begrenzung eine Einbausicherung zur eindeutigen Lagezuordnung zwischen der Bürstendichtung und dem Stator ist. Eine axiale Begrenzung kann ein radial versetzter Absatz sein. Beispielsweise weist ein Innenring als Stator einen vorgesehenen inneren Nenndurchmesser über eine axiale Länge zum Fixieren des Rings der Bürstendichtung auf. Der Ring kann über diese axiale Länge nicht weiter auf den Innenring geschoben werden, wenn der radiale Absatz mit einem kleineren Innendurchmesser ein axiales Weiterschieben des Rings verhindert. Je nach Bauweise der Bürstendichtung kann dieser Absatz zusätzlich für eine eindeutige Lagezuordnung oder Positionszuordnung zwischen dem Ring der Bürstendichtung und dem Innenring als Stator verwendet werden. Eine eindeutige Lagezuordnung kann den Einbau der Bürstendichtung in nur einer Position und Lage zulassen. Beispielsweise kann der Bauraum vor und nach der Bürstendichtung, in Axialrichtung betrachtet, nur eine Lage zulassen. Wird die Bürstendichtung um eine Achse in Radialrichtung um 180 Grad gedreht, kann beispielsweise in einer exemplarischen Bauweise die Axialsicherung nicht mehr positioniert werden. Ein

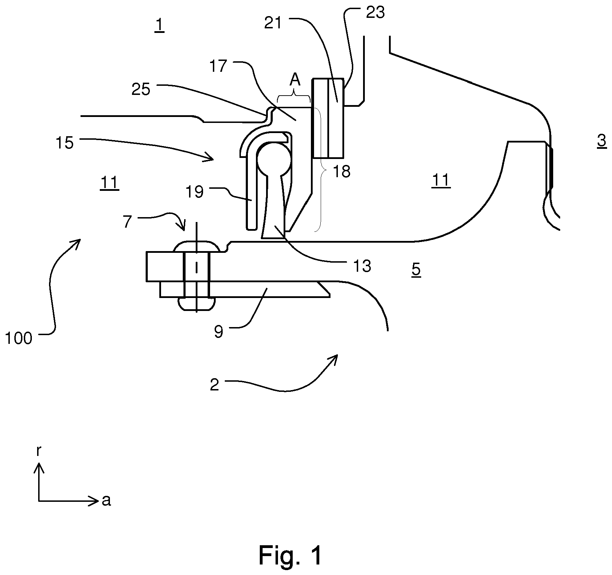

Ausführungsbeispiel einer derartigen eindeutigen Lagezuordnung wird in Fig. 1 näher beschrieben. Eine eindeutige Lagezuordnung oder Positionszuordnung eines Bauteils gegenüber einem weiteren Bauteil kann als sogenannte Einbausicherung oder als "mistake proof feature" bezeichnet werden.

Die erfindungsgemäße Einbausicherungsanordnung umfasst eine Bürstendichtungsanordnung, wobei die Bürstendichtung mittels einer am Stator angeordneten axialen Begrenzung, insbesondere mittels eines radialen Absatzes, einerseits und dem axialen Sicherungsring andererseits zur eindeutigen Lagezuordnung zwischen der Bürstendichtung und dem Stator lagefixiert ist. Die erfindungsgemäße Einbausicherungsanordnung umfasst weiterhin eine eindeutige Anordnung zur Fixierung der Bürstendichtung in beiden axialen Richtungen, sowohl in positiver als auch in negativer axialer Richtung, zwischen der axialen Begrenzung und dem axialen Sicherungsring. Diese Anordnung kann als Positionsfixierung bezeichnet werden.

Manche oder alle erfindungsgemäßen Ausführungsformen können einen, mehrere oder alle der oben und/oder im Folgenden genannten Vorteile aufweisen.

Mittels der erfindungsgemäßen Bürstendichtungsanordnung kann der Ring der Bürstendichtung (der Ring der Bürstendichtung kann als Dichtungsring bezeichnet werden) konstruktiv und fertigungstechnisch einfach ausgeführt werden. Aufgrund der erfindungsgemäßen Presspassung zwischen dem Ring und dem Stator kann vorteilhaft auf weitere oder alternative Verdrehsicherungen des Dichtungsrings gegenüber dem Stator verzichtet werden. Insbesondere ist kein Haken oder eine andere formschlüssige Verdrehsicherung an dem Dichtungsring und/oder an dem Stator notwendig, um eine Relativbewegung, insbesondere im vorgesehenen betriebsbedingten Einsatz der Bürstendichtungsanordnung, zu verhindern. Beispielsweise kann der Dichtungsring als reines Drehteil ausgeführt werden. Damit können vorteilhaft die Herstellungskosten für den Dichtungsring und/oder den Stator reduziert werden. Ein Haken oder ein anderes Bauteil ist bei einer Presspassung nicht notwendig. Weiterhin kann vorteilhaft die Montage der Bürstendichtung auf oder an dem Stator vereinfacht ausgeführt werden, da beispielsweise keine exakte Umfangspositionierung für eine formschlüssige Verbindung als Verdrehsicherung notwendig ist.

Mittels der erfindungsgemäßen Einbausicherungsanordnung kann vorteilhaft eine eindeutige Lage- und Positionsfixierung zum Einbau der Bürstendichtung erreicht werden. Bei einem falschen Einbau, also beispielsweise bei einem Einbau der Bürstendichtung um eine in Radialrichtung um 180 Grad gedrehte Position, kann zwar zunächst die Bürstendichtung auf den Stator aufgeschoben werden, nicht jedoch der axiale Sicherungsring an der vorgesehenen Position montiert werden. Somit verhindert die erfindungsgemäße Einbausicherungsanordnung eine fasche Montage des Bürstendichtung und wirkt als einfache Einbausicherung der Anordnung.

Die vorliegende Erfindung wird im Folgenden anhand der beigefügten Zeichnung exemplarisch erläutert.
- **Fig. 1**: zeigt eine erfindungsgemäße Bürstendichtungsanordnung mit einem Innenring und einem Rotor; und
- **Fig. 2**: zeigt eine Bürstendichtungsanordnung, die nicht einer Einbausicherungsanordnung entspricht.

**Fig. 1** zeigt eine erfindungsgemäße Bürstendichtungsanordnung 100 mit Detailausschnitten eines Innenrings 1 und eines Rotors 2. Der statische Innenring 1 schließt radial innenseitig über dem Umfang angeordnete Leitschaufeln eines Leitrads ab (in Fig. 1 nicht dargestellt). Das Leitrad hat die Aufgabe, die Hauptströmung in der Strömungsmaschine zur Anströmung an das stromab nachfolgende Laufrad umzulenken. Die Leitschaufeln können beispielsweise drehbar in dem Innenring 1 gelagert sein oder die Anordnung kann nicht drehbare Leitschaufeln in dem Innenring 1 vorsehen. Der Rotor 2 weist in Fig. 1 Ausschnitte einer Rotorscheibe 3 auf, die mit einer Nabe 5 verbunden ist. Die Nabe 5 ist mit einer Welle der Strömungsmaschine verbunden (in Fig. 1 nicht dargestellt). Weiterhin ist die Nabe 5 mittels eines Niets 7 mit einem Wuchtgewicht 9 verbunden.

Die erfindungsgemäße Bürstendichtungsanordnung 100 dichtet einen Spalt 11 (der Spalt 11 kann als Kavität bezeichnet werden) zwischen dem statischen Innenring 1 und der drehbaren Nabe 5 ab. Eine Bürstendichtung 15 umfasst einen Ring 18 und ein Bürstenelement 13. Der Ring 18 ist zweigeteilt und weist einen Deckring 17 und einen Stützring 19 auf. Das Bürstenelement 13 ist zwischen dem Deckring 17 und dem Stützring 19 mittels einer Klemmung fixiert. Sowohl der Deckring 17 als auch der Stützring 19 umgreifen das Bürstenelement 13 derart, dass die Bürsten des Bürstenelements 13 im Betrieb bei einer Rotation der Nabe 5 nicht in Axialrichtung a umknicken oder ausbrechen können, weder stromaufseitig (in Fig. 1 nach links) noch stromabseitig (in Fig. 1 nach rechts).

Der Deckring 17 wird erfindungsgemäß mittels einer Presspassung in dem axialen Abschnitt A mit dem Innenring 1 verbunden. Eine kraftschlüssige Presspassung kann in diesem Ausführungsbeispiel im Wesentlichen mittels Übermaßpassungen der Bauteile (Innenring 1 und Deckring 17) und unterschiedlicher Wärmeausdehnungskoeffizienten einerseits des Werkstoffs des Innenrings 1 und andererseits des Werkstoffs des Deckrings 17 umgesetzt werden, wobei die Wärmeausdehnungskoeffizienten der beiden Werkstoffe in diesem Ausführungsbeispiel unterschiedlich voneinander sind. Mittels einer derartigen Presspassung wird ein Verdrehen der Bürstendichtung 15, also eine Relativbewegung des Deckrings 17, und damit der gesamten Bürstendichtung 15, gegenüber dem Innenring 1 im vorgesehenen betriebsbedingten Einsatz (Betriebsfall) verhindert. Anders ausgedrückt ist die Reibkraft zwischen dem Deckring 17 und dem Innenring 1 ausreichend hoch, um eine Relativbewegung zwischen den beiden Bauteilen zu verhindern. Der Betriebsfall kann dabei alle vorgesehenen Einsatzbedingungen mit den entsprechenden Belastungssituationen und Betriebstemperaturen umfassen. Die Betriebstemperaturen können beispielsweise in einem Flugtriebwerk 200 Grad Celsius bis 300 Grad Celsius, oder mehr, betragen.

Rein exemplarisch kann der Innenring 1 aus einer Titanlegierung mit einem Wärmeausdehnungskoeffizienten zwischen 7,6 x 10⁻⁶ m/(m x K) und 10 x 10⁻⁶ m/(m x K) hergestellt werden oder eine solche Titanlegierung aufweisen, wobei diese Werte sich auf einen Temperaturbereich zwischen 20 Grad Celsius und 200 Grad Celsius beziehen. Eine derartige Titanlegierung ist beispielsweise der Werkstoff Ti-6A1-4V (Titanlegierung mit 6 Gewichtsprozent Aluminium und 4 Gewichtsprozent Vanadium).

Ebenfalls rein exemplarisch kann der Deckring 17 aus einer Stahllegierung mit einem Wärmeausdehnungskoeffizienten zwischen 10 x 10⁻⁶ m/(m x K) und 18 x 10⁻⁶ m/(m x K) hergestellt werden oder eine solche Stahllegierung aufweisen, wobei diese Werte sich auf einen Temperaturbereich zwischen 20 Grad Celsius und 200 Grad Celsius beziehen. Eine derartige Stahllegierung ist beispielsweise der Werkstoff X5CrNiCuNb 17-4-4 (Werkstoff Nr. 1.4548).

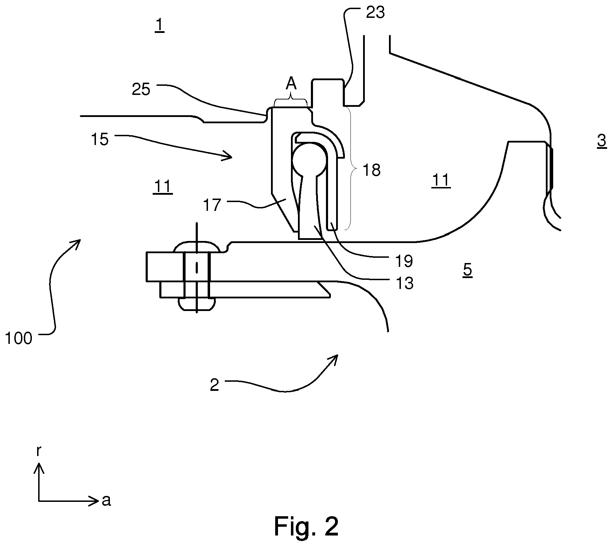

Fig. 1 zeigt weiterhin einen axialen Sicherungsring 21, der als zusätzliche Sicherung gegen eine Lockerung und/oder gegen ein axiales Verschieben der Bürstendichtung 15 in oder an dem Innenring 1 befestigt ist. Der axiale Sicherungsring 21 kann als Sprengring bezeichnet werden. Der axiale Sicherungsring 21 wird insbesondere mittels einer Vorspannung in eine Nut 23 in dem Innenring 1 positioniert. Der axiale Sicherungsring 21 ist weiterhin ein Bauteil einer Einbausicherung der Bürstendichtung 15. Bei einem falschen Einbau der Bürstendichtung 15 kann der axiale Sicherungsring 21 nicht eingebaut werden und dient somit als Einbausicherung (siehe Fig. 2).

Der Außendurchmesser des Deckrings 17 und der Innendurchmesser des Innenrings 1 weisen insbesondere in dem axialen Abschnitt A unterschiedliche Nenndurchmesser auf. Der Außendurchmesser des Deckrings 17 und der Innendurchmesser des Innenrings 1 können unterschiedliche Passungsmaße aufweisen. Im vorliegenden Fall der Presspassung weisen sowohl der Deckring 17 als auch der Innenring 1 Übermaße auf. Die Übermaße können als Toleranzmaße oder als Toleranzen bezeichnet werden. Die Presspassung ist insbesondere keine genormte Passung. Eine genormte Passung ist beispielsweise eine ISO-Passung (ISO - Internationale Organisation für Normung; englisch: International Organization for Standardization).

Zur einfacheren Montage kann die Bürstendichtung 15 mit dem Deckring 17, dem Stützring 19 und dem Bürstenelement 13 gekühlt werden, um den Außendurchmesser des Rings 18 (oder nur des Deckrings 17) zu verkleinern. Zusätzlich oder alternativ kann der Innenring 1 erwärmt werden. Beispielsweise kann die Bürstendichtung 15 um ca. 100 Grad Celsius gekühlt und/oder der Innenring 1 um ca. 100 Grad Celsius erwärmt werden. Anschließend kann die Bürstendichtung 15 in entgegengesetzter Axialrichtung a (bezogen auf das Koordinatensystem Fig. 1) in den Innenring 1 eingeschoben werden (der axiale Sicherungsring 21 ist noch nicht montiert). Bezogen auf Fig. 1 wird die Bürstendichtung 15 nach links geschoben. Nach der Montage können beide Bauteile wieder erwärmt bzw. abgekühlt werden, um sie auf die gleiche Temperatur zu bringen, beispielsweise auf eine Raumtemperatur von 20 Grad Celsius. Mittels eines nachfolgenden Temperaturausgleichs (Erwärmung der Bürstendichtung 15 bzw. Abkühlen des Innenrings 1) wird eine kraftschlüssige Presspassung in radialer Richtung in dem axialen Abschnitt A erreicht. Bei einer Erhöhung der Temperatur im Betriebszustand auf beispielsweise 150 Grad Celsius oder 200 Grad Celsius dehnt sich die Bürstendichtung 15, insbesondere der Deckring 17, aufgrund des Werkstoffes mit dem höheren Wärmeausdehnungskoeffizienten (siehe oben) stärker aus. Somit ist die kraftschlüssige Verbindung zwischen der Bürstendichtung 15 und dem Innenring 1 auch bei höheren Temperaturen gewährleistet.

Die Bürstendichtung 15, insbesondere der Deckring 17, kann nur bis zu dem Absatz 25 des Innenrings 1 aufgeschoben werden. Der Absatz 25 begrenzt den axialen Verschiebeweg der Bürstendichtung 15. Aufgrund der Bauweise des Deckrings 17 ragt jedoch ein radial weiter innen liegender Bereich des Deckrings 17 über den Absatz 25 hinaus (in Fig. 1 nach links gebogener Bereich des Deckrings 17, der an dem Stützring 19 anliegt). Auch der Stützring 19 reicht über den Absatz 25, in Fig. 1 entgegen der Axialrichtung a, hinaus (in Fig. 1 nach links). Im eingebauten Zustand wird die Bürstendichtung 15 mittels des axialen Sicherungsrings 21 fixiert und in der Position gesichert. Diese beschriebene konstruktive Ausführung der Bürstendichtung 15, des Innenrings 1 und des axialen Sicherungsrings 25 erlaubt einen Einbau der Bürstendichtung 15 nur in der in Fig. 1 gezeigten Anordnung. Bei einer um 180 Grad gedrehten Anordnung (um die radiale Achse r senkrecht zur Axialachse a) der Bürstendichtung 15 wäre ein Einbau, insbesondere des axialen Sicherungsrings 21, nicht mehr möglich. Diese konstruktive Ausgestaltung erlaubt somit eine eindeutige Lagezuordnung oder Positionszuordnung der Bürstendichtung 15 gegenüber dem Innenring 1. Diese konstruktive Ausgestaltung wird als sogenannte Einbausicherung oder als "mistake proof feature" bezeichnet. In Fig. 2 ist exemplarisch ein falscher Einbau dargestellt, der die Montage des axialen Sicherungsrings 21 verhindert.

**Fig. 2** zeigt eine Bürstendichtungsanordnung 100, die nicht einer Einbausicherungsanordnung entspricht. Die Bürstendichtung 15 ist gegenüber der Anordnung in Fig. 1 um 180 Grad gedreht, um eine Achse in Radialrichtung r. In dieser Einbauanordnung kann der axiale Sicherungsring 21 (siehe Fig. 1) nicht in die Nut 23 eingebaut werden. Somit ist die Anordnung in Fig. 2 keine Einbausicherungsanordnung. Eine Einbausicherungsanordnung, wie sie in Fig. 1 dargestellt ist, gewährleistet eine vorgesehene korrekte lage- und positionsorientierte Anordnung zum Einbau der Bürstensicherung 15.

### Bezugszeichenliste

- 100: Bürstendichtungsanordnung
- a: axial; Axialrichtung
- r: Radial; Radialrichtung
- u: Umfangsrichtung
- A: axialer Abschnitt
- 1: Innenring
- 2: Rotor
- 3: Rotorscheibe
- 5: Nabe
- 7: Niet
- 9: Wuchtgewicht
- 11: Spalt; Kavität
- 13: Bürstenelement
- 15: Bürstendichtung
- 17: Deckring
- 18: Ring
- 19: Stützring
- 21: axialer Sicherungsring
- 23: Nut
- 25: Absatz

## Patentansprüche

1. Bürstendichtungsanordnung (100) für eine Strömungsmaschine, umfassend wenigstens einen Stator, einen Rotor (2) und eine Bürstendichtung (15), wobei die Bürstendichtung (15) wenigstens ein Bürstenelement (13) und einen Ring zur Aufnahme des Bürstenelements (13) umfasst, wobei die Bürstendichtungsanordnung (100) einen Spalt (11) zwischen dem Stator und dem Rotor (2) abdichtet, und wobei der Ring mittels einer Presspassung mit dem Stator verbunden ist, wobei der Ring einen ersten Werkstoff mit einem ersten Wärmeausdehnungskoeffizienten (α₁) aufweist, und wobei wenigstens ein Abschnitt des Stators zur Aufnahme des Rings einen zweiten Werkstoff mit einem zweiten Wärmeausdehnungskoeffizienten (α₂) aufweist,
**dadurch gekennzeichnet, dass**
der erste Werkstoff einen ersten Wärmeausdehnungskoeffizienten (α₁) von größer oder gleich 10 x 10-6 pro Kelvin in einem Temperaturbereich zwischen wenigstens 20 Grad Celsius und 400 Grad Celsius aufweist, und der zweite Werkstoff einen zweiten Wärmeausdehnungskoeffizienten (α₂) von kleiner 10 x 10-6 pro Kelvin in einem Temperaturbereich zwischen wenigstens 20 Grad Celsius und 90 Grad Celsius aufweist.

2. Bürstendichtungsanordnung (100) nach Anspruch 1, wobei der Stator ein Innenring (1) eines Leitrads oder ein Gehäuseabschnitt der Strömungsmaschine ist oder aufweist.

3. Bürstendichtungsanordnung (100) nach Anspruch 1 oder 2, wobei der Rotor (2) ein Laufschaufelabschnitt oder eine Welle oder eine mit der Welle verbundene Nabe (5) der Strömungsmaschine ist oder aufweist.

4. Bürstendichtungsanordnung (100) nach einem der vorangegangenen Ansprüche, wobei die Presspassung eine in Radialrichtung kraftschlüssige Verbindung des Rings mit dem Stator umfasst.

5. Bürstendichtungsanordnung (100) nach einem der vorangegangenen Ansprüche, wobei das Bürstenelement (13) mittels einer Klemmvorrichtung in dem Ring fixiert ist.

6. Bürstendichtungsanordnung (100) nach einem der vorangegangenen Ansprüche, wobei der Ring wenigstens einen Stützabschnitt (19) zum Fixieren des Bürstenelements (13) aufweist.

7. Bürstendichtungsanordnung (100) nach einem der vorangegangenen Ansprüche, wobei die Bürstendichtungsanordnung (100) einen axialen Sicherungsring (21) zum Sichern des mit dem Stator verbundenen Rings aufweist.

8. Bürstendichtungsanordnung (100) nach einem der vorangegangenen Ansprüche, wobei der erste Werkstoff ein Stahl und/oder der zweite Werkstoff eine Titanlegierung sind.

9. Einbausicherungsanordnung, umfassend eine Bürstendichtungsanordnung (100) nach einem der vorangegangenen Ansprüche, wobei die Bürstendichtung (15) mittels einer am Stator angeordneten axialen Begrenzung, insbesondere mittels eines radialen Absatzes (25), einerseits, und dem axialen Sicherungsring (21) andererseits lagefixiert und positionsfixiert angeordnet ist.

10. Strömungsmaschine mit einer Bürstendichtungsanordnung (100) nach einem der vorangegangenen Ansprüche.

11. Strömungsmaschine nach Anspruch 10, wobei die Strömungsmaschine ein Verdichter, insbesondere ein Hochdruckverdichter, ist.

12. Strömungsmaschine nach Anspruch 10 oder 11, wobei die Strömungsmaschine ein Flugtriebwerk ist.

## Claims

1. Brush seal arrangement (100) for a turbomachine, comprising at least a stator, a rotor (2) and a brush seal (15), the brush seal (15) comprising at least one brush element (13) and a ring for receiving the brush element (13), the brush seal arrangement (100) sealing a gap (11) between the stator and the rotor (2), and the ring being connected to the stator by means of a press fit, the ring having a first material with a first coefficient of thermal expansion (α₁), and at least one portion of the stator for receiving the ring having a second material with a second coefficient of thermal expansion (α₂) **characterized in that** the first material has a first coefficient of thermal expansion (α₁) greater than or equal to 10 x 10-6 per Kelvin in a temperature range between at least 20 degrees Celsius and 400 degrees Celsius, and the second material has a second coefficient of thermal expansion (α₂) of less than 10 x 10-6 per Kelvin in a temperature range between at least 20 degrees Celsius and 90 degrees Celsius.

2. Brush seal arrangement (100) according to claim 1, wherein the stator is or has an inner ring (1) of a guide wheel or a housing portion of the turbomachine.

3. Brush seal arrangement (100) according to either claim 1 or claim 2, wherein the rotor (2) is or has a blade portion or a shaft or a turbomachine hub (5) connected to the shaft.

4. Brush seal arrangement (100) according to any of the preceding claims, wherein the press fit comprises a frictional connection of the ring to the statorin the radial direction.

5. Brush seal arrangement (100) according to any of the preceding claims, wherein the brush element (13) is secured in the ring by means of a clamping device.

6. Brush seal arrangement (100) according to any of the preceding claims, wherein the ring has at least one support portion (19) for securing the brush element (13).

7. Brush seal arrangement (100) according to any of the preceding claims, wherein the brush seal arrangement (100) has an axial securing ring (21) for securing the ring connected to the stator.

8. Brush seal arrangement (100) according to any of the preceding claims, wherein the first material is a steel and/or the second material is a titanium alloy.

9. Built-in securing arrangement, comprising a brush seal arrangement (100) according to any of the preceding claims, wherein the brush seal (15) is arranged so as to be fixed in place and fixed in position both by means of an axial limitation arranged on the stator, in particular by means of a radial shoulder (25), and the axial locking ring (21).

10. Turbomachine comprising a brush seal arrangement (100) according to any of the preceding claims.

11. Turbomachine according to claim 10, wherein the turbomachine is a compressor, in particular a high-pressure compressor.

12. Turbomachine according to either claim 10 or claim 11, wherein the turbomachine is an aircraft engine.

## Revendications

1. Système de joint balai (100) pour une turbomachine, comprenant au moins un stator, un rotor (2) et un joint balai (15), le joint balai (15) comprenantau moins un élément balai (13) et un anneau destiné à recevoir l'élément balai (13), le système de joint balai (100) assurant l'étanchéité d'une fente (11) entre le stator et le rotor (2), et l'anneau étant relié au stator au moyen d'un ajustement serré, l'anneau comportant un premier matériau présentant un premier coefficient de dilatation thermique (α₁), et au moins une section du stator destinée à recevoir l'anneau comportant un second matériau présentant un second coefficient de dilatation thermique (α₂), **caractérisé en ce que** le premier matériau présente un premier coefficient de dilatation thermique (α₁) supérieur ou égal à 10 x 10⁻⁶ par Kelvin dans une plage de température comprise entre au moins 20 et 400 degrés Celsius, et **en ce que** le second matériau présente un second coefficient de dilatation thermique (α₂) inférieur à 10 x 10⁻⁶ par Kelvin dans une plage de température comprise entre au moins 20 et 90 degrés Celsius.

2. Système de joint balai (100) selon la revendication 1, dans lequel le statorest ou comporte un anneau intérieur (1) d'une roue de guidage ou une section de carter de la turbomachine.

3. Système de joint balai (100) selon la revendication 1 ou 2, dans lequel le rotor (2) est ou comporte une section d'aube directrice ou un arbre ou un moyeu (5) de la turbomachine relié à l'arbre.

4. Système de joint balai (100) selon l'une des revendications précédentes, dans lequel l'ajustement serré comprend une liaison de force de l'anneau au stator dans la direction radiale.

5. Système de joint balai (100) selon l'une des revendications précédentes, dans lequel l'élément de balai (13) est fixé dans l'anneau au moyen d'un dispositif de serrage.

6. Système de joint balai (100) selon l'une des revendications précédentes, dans lequel l'anneau comporte au moins une section de support (19) pour la fixation de l'élément de balai (13).

7. Système de joint balai (100) selon l'une des revendications précédentes, le système de joint balai (100) comportant un anneau de fixation axial (21) pour la fixation de l'anneau relié au stator.

8. Système de joint balai (100) selon l'une des revendications précédentes, dans lequel le premier matériau est un acier et/ou le second matériau est un alliage de titane.

9. Système de mise à la terre, comprenant un système de joint balai (100) selon l'une des revendications précédentes, dans lequel le joint balai (15) est disposé de manière fixe et immobilisée en position au moyen d'une délimitation axiale disposée au niveau du stator, en particulier au moyen d'un épaulement radial (25), d'une part, et de l'anneau de fixation axial (21), d'autre part.

10. Turbomachine comportant un système de joint balai (100) selon l'une des revendications précédentes.

11. Turbomachine selon la revendication 10, la turbomachine étant un compresseur, en particulier un compresseur à haute pression.

12. Turbomachine de la revendication 10 ou 11, la turbomachine étant un moteur d'avion.
